# EUROPÄISCHE PATENTANMELDUNG

(11) **EP 4 574 870 A1**
(43) Veröffentlichungstag der Anmeldung: **25.06.2025**
(21) Anmeldenummer: 23217952.3
(22) Anmeldetag: 19.12.2023
(51) Int. Cl.: C08G 18/28, C08G 18/79, C08G 18/80, C09D 175/04, C09J 175/04

(54) **BLOCKIERTES POLYISOCYANAT**

(71) Anmelder: Covestro Deutschland AG, 51373 Leverkusen (DE)
(72) Erfinder: Darmandeh, Heidar, 40597 Düsseldorf (DE)
(74) Vertreter: Levpat

(57) **Zusammenfassung**

Die Erfindung betrifft ein blockiertes Polyisocyanat, enthaltend zwei oder mehr 2-Carbamoylpropan-1,2,3-tricarboxylat-Strukturen sowie ein Verfahren zu deren Herstellung. Außerdem betrifft die Erfindung die Verwendung von Citraten, eine Zusammensetzung enthaltend das blockierte Polyisocyanat, aber auch Formkörper oder beschichtete Substrate aus den blockierten Polyisocyanaten.

## Beschreibung

Die vorliegende Erfindung betrifft ein blockiertes Polyisocyanat sowie ein Verfahren zu dessen Herstellung. Außerdem betrifft die Erfindung die Verwendung von Citraten, eine Zusammensetzung enthaltend das blockierte Polyisocyanat, aber auch Formkörper oder beschichtete Substrate aus den blockierten Polyisocyanaten.

Die Anwendung von Blockierungsmittel zur vorübergehenden Desaktivierung von Isocyanatgruppen ist seit langem bekannt. Blockierte Polyisocyanate werden unter anderem zur Herstellung von bei Raumtemperatur lagerstabilen 1-K-PUR-Systemen eingesetzt, die bei Erreichen der Deblockierungstemperatur des Blockierungsmittels beginnen zu vernetzen. Die blockierten Polyisocyanate werden dabei mit typischen Isocyanat-reaktiven Verbindungen umgesetzt wie z.B. mit Hydroxylgruppen enthaltenden Polyestern oder Polyacrylaten. 1-K-PUR-Lacke werden heute im Can & Coil Coating, der Automobil-Erstlackierung oder der Kunststofflackierung eingesetzt. Je nach Anforderungsprofil kommen verschiedene Polyisocyanate auf Basis von aliphatischen Diisocyanaten zum Einsatz. Beispielhaft seien hier die linearaliphatischen Diisocyanate Hexamethylendiisocyanat (HDI) und Pentamethylendiisocyanat (PDI) oder die cycloaliphatischen Diisocyanate Isophorondiisocyanat (IPDI) und 4,4'-Diisocyanatodicyclohexylmethan ("H₁₂MDI") genannt.

Übersichtsartikel zum Einsatz von blockierten Polyisocyanaten und Ihren Eigenschaften finden sich beispielsweise in Wicks, Z. Progress in Organic Coatings 3 (1975) 73-99, Wicks, Z. Progress in Organic Coatings 9 (1981) 3-28 , D. A. Wicks and Z. W. Wicks, Progress in Organic Coatings, (1999), 148-172.

Das Blockierungsmittel hat erheblichen Einfluss auf die Eigenschaften von 1-K-PUR Systemen. Beispielsweise beeinflusst das Blockierungsmittel unter anderem maßgeblich die Reaktivität (Deblockierungstemperatur), die Thermovergilbung, die Verträglichkeit oder die Viskosität der 1-K-PUR-Formulierung. (U. Meier-Westhues et al. "Polyurethanes: Coatings, Adhesives and Sealants", 2nd Revised Edition, pp 35 - 42 Hanover: Vincentz Network, 2019).

Die technisch relevantesten Blockierungsmittel sind ε-Caprolactam, Methyl-ethyl-ketoxim (im Folgenden auch Butanonoxim oder MEKO genannt), Malonsäurediethylester, sekundäre Amine sowie Triazol- und Pyrazolderivate, beipielsweise beschrieben in EP-A 0 576 952, EP-A 0 566 953, EP-A 0 159 117, US-A 4482 721, WO 97/12924 oder EP-A 0 744 423.

Polyisocyanate, die mit aliphatischen Alkoholen wie beispielsweise Methanol oder Ethanol blockiert sind, werden in der Regel auf Grund sehr hoher Einbrenntemperaturen (>180°C) nicht als Blockierungsmittel eingesetzt. Mit aromatischen Alkoholen, wie beispielsweise Phenol blockierte Polyisocyanate, weisen zwar niedrigere Einbrenntemperaturen als ihre aliphatischen Analoga auf (für Phenol ca. 150 °C), kommen jedoch aus Kompatibilitäts-, Löslichkeits- und Toxizitätsnachteilen nicht breit zum Einsatz.

Die am häufigsten eingesetzten Blockierungsmittel für Isocyanate sind ε-Caprolactam und MEKO. Während im Fall von ε-Caprolactam in der Regel Einbrenntemperaturen um 170°C oder höher angewandt werden, können blockierte 1K-PUR-Einbrennlacke, bei denen MEKO als Blockierungsmittel eingesetzt wurde, schon bei 10 bis 20°C niedrigeren Temperaturen eingebrannt werden. MEKO ist jedoch auf Grund seiner toxikologischen Eigenschaften von Nachteil.

Blockierte Polyisocyanate auf Basis linearaliphatischer Diisocyanate wie HDI und PDI neigen stark zur Kristallisation -und Verfestigung, sind jedoch auf Grund Ihres Eigenschaftsprofils unverzichtbar für hochqualitative PUR-Einbrennlacke. Mit ε-Caprolactam oder MEKO blockierte Polyisocyanate auf Basis linearaliphatischer Diisocyanate weisen (wegen Ihrer asymmetrischen Strukturen) zwar eine geringere Kristallisations- und Verfestigungstendenz im Vergleich zu anderen Blockierungsmittel auf, zeigen jedoch insbesondere in hoch-Festkörper-haltigen Formulierungen Nachteile im Hinblick auf verarbeitbare Viskositäten.

Des weiteren basieren viele Blockierungsmittel gänzlich auf fossilen Rohstoffen, was ein weiterer Nachteil der im Stand der Technik bekannten Blockierungsmittel ist.

Der vorliegenden Erfindung lag daher die Aufgabe zugrunde, blockierte Polyisocyanate bereitzustellen, die die vorgenannten Nachteile des Standes der Technik nicht aufweisen und bei erheblich geringerer Toxizität des Blockierungsmittels eine deutlich geringere Viskosität der blockierten Polyisocyanate aufweisen.

Diese Aufgabe konnte gelöst werden durch Bereitstellung eines blockierten Polyisocyanates, enthaltend zwei oder mehr 2-Carbamoylpropan-1,2,3-tricarboxylat-Strukturen.

Überraschenderweise wurde gefunden, dass Triester der Citronensäure (im Rahmen der Erfindung auch "Citrate" genannt) als Blockierungsmittel für Isocyanate eingesetzt werden können. Weiterhin ist es überraschend, dass sich Triester der Citronensäure als tertiäre Alkohole überhaupt als Blockierungsmittel für Isocyanate eignen, da Urethanaddukte von tertiären Alkoholen und Isocyanaten in der Regel bei Erhitzen zu Eliminierungsreaktionen neigen. Letzteres wird technisch genutzt, um beispielsweise Polyisocyanate mit Biuretstruktur nach dem tert-Butanol-Verfahren wie beispielsweise in DE1931055 oder DE1543578 beschrieben, herzustellen.

Bevorzugt bedeuten die Ausdrücke "umfassend" oder "enthaltend", "im Wesentlichen bestehend aus" und besonders bevorzugt "bestehend aus". Die in den Patentansprüchen und in der Beschreibung genannten weiteren Ausführungsformen können beliebig kombiniert werden, sofern sich aus dem Kontext nicht eindeutig das Gegenteil ergibt.

"Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindungen bezieht sich diese Angabe nicht auf die absolute Menge an Molekülen, sondern auf die Art des Bestandteils. "Mindestens einer Polyisocyanatkomponente" bedeutet daher beispielsweise, dass nur eine Art von Polyisocyanatkomponente oder mehrere verschiedene Arten von Polyisocyanatkomponenten, ohne Angaben über die Menge der einzelnen Verbindungen zu machen, enthalten sein können.

Zahlenwerte, die hierin ohne Dezimalstellen angegeben sind, beziehen sich jeweils auf den vollen angegebenen Wert mit einer Dezimalstelle. So steht beispielsweise "99 %" für "99,0 %".

Numerische Bereiche, die in dem Format "in/von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Vorliegend ist der Begriff "aliphatisch" definiert als nicht-aromatische Kohlenwasserstoffgruppen, die verzweigt oder unverzweigt und jeweils gesättigt oder ungesättigt sind.

Vorliegend ist der Begriff "alicyclisch" oder "cycloaliphatisch" als gegebenenfalls substituierte, carbocyclische oder heterocyclische Verbindungen oder Einheiten definiert ist, die nicht aromatisch sind (wie z.B. Cycloalkane, Cycloalkene oder Oxa-, Thia-, Aza- oder Thiazacycloalkane). Besondere Beispiele sind Cyclohexylgruppen, Cyclopentylgruppen und ihre N- oder O-heterocyclischen Derivate wie z.B. Pyrimidin, Pyrazin, Tetrahydropyran oder Tetrahydrofuran.

Vorliegend ist der Begriff "araliphatisch" definiert als aliphatische Kohlenwasserstoffreste, die gesättigt oder ungesättigt sind und mindestens einen aromatischen Substituenten aufweisen.

Für den Fall, dass die Gruppen oder Verbindungen als "gegebenenfalls substituiert" oder "substituiert" offenbart werden, sind geeignete Substituenten -F, -Cl, -Br, -I, -OH, -OCH3, OCH2CH3, -O-Isopropyl oder -O-n-Propyl, -OCF3, -CF3, -S-C1-6-Alkyl und/oder (gegebenenfalls über ein angehängtes Heteroatom) eine lineare oder verzweigte, aliphatische und/oder alicyclische Struktureinheit mit 1 bis 12 Kohlenstoffatomen, die jeweils als Ersatz für ein kohlenstoffgebundenes Wasserstoffatom des betreffenden Moleküls fungiert. Bevorzugte Substituenten sind Halogen (insbesondere -F, -Cl), C1-6-Alkoxy (insbesondere Methoxy und Ethoxy), Hydroxy, Trifluormethyl und Trifluormethoxy, die jeweils als Ersatz für ein an Kohlenstoff gebundenes Wasserstoffatom des betreffenden Moleküls fungieren.

Polyisocyanate A) für das erfindungsgemäße blockierte Polyisocyanat sowie das erfindungsgemäße Verfahren sind beliebige Diisocyanate, Triisocyanate und/oder Polyisocyanate mit aliphatisch, cycloaliphatisch, araliphatisch und/oder aromatisch gebundenen Isocyanatgruppen.

Geeignete Diisocyanate und Triisocyanate A) sind beliebige, auf verschiedene Weise, beispielsweise durch Phosgenierung der korrespondierenden Diamine oder Triamine, die sowohl unter Verwendung fossiler Rohstoffe oder auch aus nachwachsenden Rohstoffen, gegebenenfalls massenbilanziert hergestellt werden können, in der Flüssig- oder Gasphase oder auf phosgenfreien Weg, wie z. B. durch thermische Urethanspaltung, zugängliche Diisocyanate und Triisocyanate, vorzugsweise solche des Molekulargewichtsbereichs 140 bis 400 mit aliphatisch, cycloaliphatisch, araliphatisch und/oder aromatisch gebundenen Isocyanatgruppen, wie z. B. 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 2,4'- und 4,4'-Diisocyanatodicyclohexylmethan (H₁₂-MDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1-lsocyanato-1-methyl-4(3)isocyanatomethylcyclohexan, Bis-(isocyanatomethyl)-norbornan (NBDI), 4-Isocyanatomethyl-1,8-octandiisocyanat (Triisocyanatononan; TIN), 1,3- und 1,4-Bis(isocyanatomethyl)benzol (Xylylendiisocyanat, XDI), 1,3- und 1,4-Bis-(2-isocyanato-prop-2-yl)-benzol (TMXDI), 1,3-Bis(isocyanatomethyl)-4-methylbenzol, 1,3-Bis(isocyanatomethyl)-4-ethylbenzol, 1,3-Bis(isocyanatomethyl)-5-methylbenzol, 1,3-Bis(isocyanatomethyl)-4,5-dimethylbenzol, 1,4-Bis(isocyanatomethyl)-2,5-dimethylbenzol, 1,4-Bis(isocyanatomethyl)-2,3,5,6-tetramethylbenzol, 1,3-Bis(isocyanatomethyl)-5-tert.-butylbenzol, 1,3-Bis(isocyanatomethyl)-4-chlorbenzol, 1,3-Bis(isocyanatomethyl)-4,5-dichlorbenzol, 1,3-Bis(isocyanatomethyl)-2,4,5,6-tetrachlorbenzol, 1,4-Bis(isocyanatomethyl)-2,3,5,6-tetrachlorbenzol, 1,4-Bis(isocyanatomethyl)-2,3,5,6-tetrabrombenzol, 1,4-Bis(2-isocyanatoethyl)benzol und 1,4-Bis(isocyanatomethyl)naphthalin, 1,2-, 1,3- und 1,4-Diisocyanatobenzol (Phenylendiisocyanat), 2,4- und 2,6-Diisocyanatotoluol (TDI), 2,3,5,6-Tetramethyl-1,4-diisocyanatobenzol, die isomeren Diethylphenylendiisocyanate, Diisopropylphenylendiisocyanate, Diisododecylphenylendiisocyanate und Biphenyldiisocyanate, 3,3'-Dimethoxybiphenyl-4,4'-diisocyanat, 2,2`-, 2,4'- und 4,4'-Diisocyanatodiphenylmethan (MDI), 3,3'-Dimethyldiphenylmethan-4,4'-diisocyanat, 4,4'-Diisocyanatodiphenylethan, 1,5-Diisocyanatonaphthalin (Naphthylendiisocyanat, NDI), Diphenyletherdiisocyanat, Ethylenglycoldiphenyletherdiisocyanat, Diethylenglycoldiphenyletherdiisocyanat, 1,3-Propylenglycoldiphenyletherdiisocyanat, Benzophenondiisocyanat, Triisocyanatobenzol, 2,4,6-Triisocyanatotoluol, Trimethylbenzoltriisocyanat, Diphenylmethan-2,4,4'-triisocyanat, 3-Methyldiphenylmethan-4,6,4'-triisocyanat, die isomeren Naphthalintriisocyanate und Methylnaphthalindiisocyanate, Triphenylmethantriisocyanat, 2,4-Diisocyanato-1-[(5-isocyanato-2-methylphenyl)methyl]benzol oder Mischungen aus mindestens zwei solcher Diisocyanate und Triisocyanate.

Geeignete Polyisocyanate A) sind beliebige, durch Modifizierung einfacher aliphatischer, cycloaliphatischer, araliphatischer und/oder aromatischer Diisocyanate und/oder Triisocyanate, beispielsweise solcher der vorstehend genannten Art, hergestellte Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 EP-A 0 798 299, EP-A 0 962 454, EP-A 0 962 455, EP-A 2 785 760, EP-A 2 883 895, EP-A 3 107 922, EP-A 3 107 948 und EP-A 3 337 836 beispielhaft beschrieben sind oder um beliebige Gemische solcher Polyisocyanate.

Gegebenenfalls können bei der Modifizierung der genannten Diisocyanate und/oder Triisocyanate zu Polyisocyanaten A) in untergeordneten Mengen auch Monoisocyanate, insbesondere solche des Molekulargewichtsbereichs 99 bis 300, wie z. B. n-Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyanat, Benzylisocyanat, Phenylisocyanat oder Naphtylisocyanat, mitverwendet werden. Falls überhaupt kommen Monoisocyanate dabei in Mengen von bis 30 Gew.-%, vorzugsweise bis zu 20 Gew.-%, besonders bevorzugt bis zu 10 Gew.-%, bezogen auf die Gesamtmenge an Mono-, Di- und Triisocyanaten, zum Einsatz.

Bei der Herstellung der Polyisocyanate A) schließt sich an die eigentliche Modifizierungsreaktion in der Regel ein weiterer Verfahrenschritt zur Abtrennung der nicht umgesetzten überschüssigen monomeren Diisocyanate und/oder Triisocyanate und gegebenenfalls Monoisocyanate an. Diese Monomerenabtrennung erfolgt nach an sich bekannten Verfahren vorzugsweise durch Dünnschichtdestillation im Vakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan.

In einer ersten bevorzugten Ausführungsform der Erfindung ist das blockiertes Polyisocyanat dadurch gekennzeichnet, dass es zusätzlich eine oder mehrere Isocyanurat-, Allophanat-, Urethan-, Harnstoff-, Uretdion-, Iminooxadiazindion-, Oxadiazintrion- und/oder Biuretstruktur enthält.

Bevorzugt kommen beim erfindungsgemäßen Verfahren oder als Ausgangsmaterial im erfindungsgemäßen blockierten Polyisocyanat als Polyisocyanat A) Polyisocyanate der genannten Art zum Einsatz, die einen Gehalt an Isocyanatgruppen von 6,0 bis 26,0 Gew.-%, vorzugsweise von 8,0 bis 25,0 Gew.-%, besonders bevorzugt 10,0 bis 24,0 Gew.-%, und/odereinen Gehalt an monomeren Diisocyanaten von weniger als 0,50 Gew.-%, vorzugsweise weniger als 0,30 Gew.-%, stärker bevorzugt weniger als 0,20 Gew.-%, besonders bevorzugt von weniger als 0,10 Gew.-% aufweisen. Für den alternativen, optionalen Fall, dass Triisocyanate und/oder Monoisocyanate zur Herstellung der Polyisocyanate A) eingesetzt wurden, beziehen sich die vorstehend genannten Rest-Monomeren Gehalte von weniger als 0,50 Gew.-%, vorzugsweise weniger als 0,30 Gew.-%, stärker bevorzugt weniger als 0,20 Gew.-%, besonders bevorzugt von weniger als 0,10 Gew.-% auf alle eingesetzten Diisocyanate, Triisocyanate und Monoisocyanate. Die NCO-Gehalte werden nach DIN EN ISO 11909:2007-05, die Rest-Monomeren Gehalte nach DIN EN ISO 10283:2007-11 gaschromatographisch mit internem Standard bestimmt.

Besonders bevorzugte Polyisocyanate A) sind solche der genannten Art mit ausschließlich aliphatisch und/oder cycloaliphatisch gebundenen Isocyanatgruppen.

Ganz besonders bevorzugte Polyisocyanate A) sind mindestens Isocyanuratstrukturen enthaltende Polyisocyanate auf Basis von 1,5-Diisocyanatopentan, 1,6-Diisocyanatohexan, 1-Isocyanato-3,3,5-trimethyl-5-isocyanatomethylcyclohexan, 1,3-Bis(isocyanatomethyl)-benzol, Bis-(isocyanatomethyl)-norbornan und/oder 4,4'-Diisocyanatodicyclohexylmethan.

In einer weiteren bevorzugten Ausführungsform ist der freie NCO-Gehalt des erfindungsgemäßen blockierten Polyisocyanates ≤ 5 Gew.-%, bevorzugt ≤ 2 Gew.-%, besonders bevorzugt ≤ 1 Gew.-%, noch stärker bevorzugt ≤ 0,5 Gew.-% und ganz besonders bevorzugt ≤ 0,3 Gew.-%, bestimmt mittels Titration nach DIN EN ISO 11909:2007-05 und bezogen auf das Gesamtgewicht des blockierten Polyisocyanates.

Die erfindungsgemäßen blockierten Polyisocyanate können beispielsweise mittels NMR-Spektrometrie oder HPLC-MS durch qualitative und quantitative Bestimmung der 2-Carbamoylpropan-1,2,3-tricarboxylat-Strukturen identifiziert werden.

In einer weiteren bevorzugten Ausführungsform weisen die zwei oder mehr 2-Carbamoylpropan-1,2,3-tricarboxylat-Strukturen des erfindungsgemäßen blockierten Polyisocyanates eine allgemeine Formel (I), 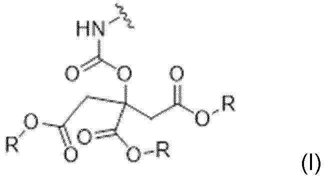 auf, in welcher
R unabhängig voneinander für einen beliebigen gesättigten oder ungesättigten, linearen oder verzweigten, aliphatischen Rest mit 1 bis 18 Kohlenstoffatomen, gesättigten oder ungesättigten cycloaliphatischen Rest mit 3 bis 18 Kohlenstoffatomen, araliphatischen Rest mit 7 bis 18 Kohlenstoffatomen und/oder aromatischen Rest mit 6 bis 18 Kohlenstoffatomen steht, der jeweils substituiert oder unsubstituiert ist und/oder Heteroatome in der Kette aufweist.

In einer ebenfalls bevorzugten Ausführungsform weisen die zwei oder mehr 2-Carbamoylpropan-1,2,3-tricarboxylat-Strukturen des erfindungsgemäßen blockierten Polyisocyanates eine allgemeine Formel (I), 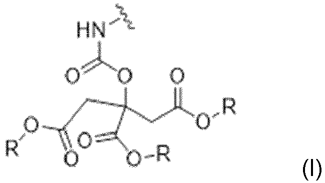 auf, in welcher
R unabhängig voneinander für einen beliebigen gesättigten oder ungesättigten, linearen oder verzweigten, aliphatischen Rest mit 1 bis 8 Kohlenstoffatomen und/oder gesättigten oder ungesättigten cycloaliphatischen Rest mit 5 bis 8 Kohlenstoffatomen steht, der jeweils substituiert oder unsubstituiert ist und/oder Heteroatome in der Kette aufweist, vorzugsweise in welcher R unabhängig voneinander für einen beliebigen gesättigten oder ungesättigten, linearen oder verzweigten, aliphatischen Rest mit 1 bis 4 Kohlenstoffatomen steht, der jeweils substituiert oder unsubstituiert ist und/oder Heteroatome in der Kette aufweist, besonders bevorzugt in welcher R unabhängig voneinander für einen beliebigen gesättigten oder ungesättigten, linearen oder verzweigten, aliphatischen Rest mit 2 bis 4 Kohlenstoffatomen steht.

Die Carbamoylpropan-1,2,3-tricarboxylat-Strukturen und damit auch die Strukturen der allgemeinen Formel (I) stellen die blockierten NCO-Gruppen dar, wobei ein entsprechendes Citrat als Blockierungsmittel fungiert. Da Blockierungsmittel stets in großer Menge eingesetzt werden, um im Wesentlichen alle freien Isocyanatgruppen zu blockieren, bieten die Citrate den ökologischen Vorteil großtechnisch aus (teilweise) bio-basierten Rohstoffen zugänglich zu sein.

Ein weiterer Gegenstand der vorliegenden Erfindung ist ein Verfahren zur Herstellung eines blockierten Polyisocyanates, umfassend eine Umsetzung von mindestens einem Polyisocyanat A) mit mindestens einem Citrat B) gegebenenfalls in Gegenwart mindestens eines Katalysators, wobei das Citrat B) in einer Menge von ≥ 95 Äquivalent-% bezogen auf die Isocyanatgruppen des Polyisocyanates A) eingesetzt wird.

Die geeigneten und bevorzugten Polyisocyanate A) sind die vorstehend beschriebenen. In einer weiteren bevorzugten Ausführungsform des erfindungsgemäßen Verfahrens weist das mindestens eine Polyisocyanat A) aliphatisch, cycloaliphatisch, araliphatisch und/oder aromatisch gebundene Isocyanatgruppen auf und/oder umfasst bevorzugt ein oder mehrere Isocyanuratstrukturen enthaltende Polyisocyanate auf Basis von 1,5-Diisocyanatopentan, 1,6-Diisocyanatohexan, 1-Isocyanato-3,3,5-trimethyl-5-isocyanatomethylcyclohexan, 1,3-Bis(isocyanatomethyl)-benzol, Bis-(isocyanatomethyl)-norbornan und/oder 4,4'-Diisocyanatodicyclohexylmethan.

Bevorzugt wird das Citrat B) in einer Menge von ≥ 98 Äquivalent-%, besonders bevorzugt ≥ 99 Äquivalent-%, noch stärker bevorzugt ≥ 99,5 Äquivalent-% und am stärksten bevorzugt ≥ 99,7 Äquivalent-%, bezogen auf die Isocyanatgruppen des Polyisocyanates A), eingesetzt.

Das mindestens eine Citrat B) kann aus verschiedenen Verbindungen gewählt werden. In einer weiteren bevorzugten Ausführungsform des erfindungsgemäßen Verfahrens ist das mindestens eine Citrat B), eines der allgemeinen Formel (II), 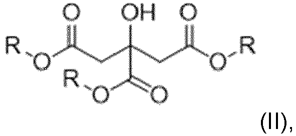 in welcher
- R: unabhängig voneinander für einen beliebigen gesättigten oder ungesättigten, linearen oder verzweigten, aliphatischen Rest mit 1 bis 18 Kohlenstoffatomen, gesättigten oder ungesättigten cycloaliphatischen Rest mit 3 bis 18 Kohlenstoffatomen, araliphatischen Rest mit 7 bis 18 Kohlenstoffatomen und/oder aromatischen Rest mit 6 bis 18 Kohlenstoffatomen steht, der jeweils substituiert oder unsubstituiert ist und/oder Heteroatome in der Kette aufweist.

In einer weiteren bevorzugten Ausführungsform des erfindungsgemäßen Verfahrens ist das mindestens eine Citrat B), eines der allgemeinen Formel (II), 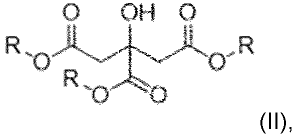 in welcher
- R: unabhängig voneinander für einen beliebigen gesättigten oder ungesättigten, linearen oder verzweigten, aliphatischen Rest mit 1 bis 8 Kohlenstoffatomen und/oder gesättigten oder ungesättigten cycloaliphatischen Rest mit 5 bis 8 Kohlenstoffatomen steht, der jeweils substituiert oder unsubstituiert ist und/oder Heteroatome in der Kette aufweist, vorzugsweise in welcher R unabhängig voneinander für einen beliebigen gesättigten oder ungesättigten, linearen oder verzweigten, aliphatischen Rest mit 1 bis 4 Kohlenstoffatomen steht, der jeweils substituiert oder unsubstituiert ist und/oder Heteroatome in der Kette aufweist, besonders bevorzugt in welcher R unabhängig voneinander für einen beliebigen gesättigten oder ungesättigten, linearen oder verzweigten, aliphatischen Rest mit 2 bis 4 Kohlenstoffatomen steht.

Beispielhafte geeignete und bevorzugte Citrate B) sind Trimethylcitrat, Triethylcitrat, Tri-n-propylcitrat, Tri-iso-propylcitrat, Tri-n-butylcitrat, Tri-sec-butylcitrat, Tri-iso-butylcitrat, Tri-tert-butylcitrat, Tri-n-pentylcitrat, Tri(2-pentyl)citrat, Tri(3-pentyl)citrat, Tri(2-methyl-1-butyl)citrat , Tri(2-methyl-2-butyl)citrat, Tri-(3-methyl-1-butyl)citrat, Tri(3-methyl-2-butyl)citrat, Tri(2,2-Dimethyl-1-propyl)citrat, Tri-n-hexylcitrat, Tri(2-hexyl)citrat, Tri(3-hexyl)citrat, Tri(2-methyl-1-pentyl)citrat, Tri(2-methyl-2-pentyl)citrat, Tri(2-methyl-3-pentyl)citrat, Tri(4-methyl-1-pentyl)citrat, Tri(4-methyl-2-pentyl)citrat, Tri(3-methyl-1-pentyl)citrat, Tri(3-methyl-2-pentyl)citrat, Tri(3-methyl-3-pentyl)citrat, Tri(2,2-dimethyl-1-butyl)citrat, Tri(3,3-dimethyl-1-butyl)citrat, Tri(3,3-dimethyl-2-butyl)citrat, Tri(2,3-dimethyl-1-butyl)citrat, Tri(2,3-dimethyl-2-butyl)citrat, Tri(2-ethyl-1-butyl)citrat, Tri-n-heptylcitrat, Tri-(2-heptyl)citrat, Tri-(3-heptyl)citrat, Tri-(4-heptyl)citrat, Tri(5-methyl-1-hexyl)citrat, Tri(5-methyl-2-hexyl)citrat, Tri(5-methyl-3-hexyl)citrat, Tri(2-methyl-3-hexyl)citrat, Tri(2-methyl-2-hexyl)citrat, Tri(2-methyl-1-hexyl)citrat, Tri(4-methyl-1-hexyl)citrat, Tri(4-methyl-2-hexyl)citrat, Tri(4-methyl-3-hexyl)citrat, Tri(3-methyl-3-hexyl)citrat, Tri(3-methyl-2-hexyl)citrat, Tri(3-methyl-1-hexyl)citrat, Tri(2-ethyl-1-pentyl)citrat, Tri(3-ethyl-1-pentyl)citrat, Tri(3-ethyl-2-pentyl)citrat, Tri(3-ethyl-3-pentyl)citrat, Tri(3,4-dimethyl-1-pentyl)citrat, Tri(3,4-dimethyl-2-pentyl)citrat, Tri(2,3-dimethyl-1-pentyl)citrat, Tri(2,3-dimethyl-2-pentyl)citrat,Tri(2,3-dimethyl-3-pentyl)citrat, Tri(2-isopropyl-1-butyl)citrat, Tri(2,3,3-trimethyl-1-butyl)citrat); Tri(2,2,3-trimethyl-1-butyl)citrat); Tri(2,3,3-trimethyl-2-butyl)citrat), Tri(3,3-dimethyl-1-pentyl)citrat, Tri(3,3-dimethyl-2-pentyl)citrat, Tri(2-ethyl-2methyl-1-butyl)citrat, Tri(4,4-dimethyl-1-pentyl)citrat, Tri(4,4-dimethyl-2-pentyl)citrat, Tri(2,2-dimethyl-1-pentyl)citrat, Tri-n-octylcitrat, Tri(2-octyl)citrat, Tri(3-octyl)citrat), Tri(4-octyl)citrat, Tri(2-methyl-1-heptyl)citrat, Tri(2-methyl-2-heptyl)citrat, Tri(2-methyl-3-heptyl)citrat, Tri(2-methyl-4-heptyl)citrat, Tri(3-methyl-1-heptyl)citrat, Tri(3-methyl-2-heptyl)citrat, Tri(3-methyl-3-heptyl)citrat, Tri(3-methyl-4-heptyl)citrat, Tri(4-methyl-1-heptyl)citrat,, Tri(4-methyl-3-heptyl)citrat, Tri(4-methyl-4-heptyl)citrat, Tri(5-methyl-1-heptyl)citrat, Tri(5-methyl-2-heptyl)citrat, Tri(5-methyl-3-heptyl)citrat, Tri(6-methyl-1-heptyl)citrat, Tri(6-methyl-2-heptyl)citrat, Tri(6-methyl-3-heptyl)citrat, Tri(2,2-dimethyl-1-hexyl)citrat, Tri(2,2-dimethyl-3-hexyl)citrat, Tri(2,3-dimethyl-1-hexyl)citrat , Tri(2,3-dimethyl-2-hexyl)citrat, Tri(2,3-dimethyl-3-hexyl)citrat, Tri(2,4-dimethyl-1-hexyl)citrat, Tri(2,4-dimethyl-2-hexyl)citrat, Tri(2,4-dimethyl-3-hexyl)citrat Tri(2,5-dimethyl-1-hexyl)citrat, Tri(2,5-dimethyl-2-hexyl)citrat, Tri(2,5-dimethyl-3-hexyl)citrat, Tri(3,3-dimethyl-1-hexyl)citrat, Tri(3,3-dimethyl-2-hexyl)citrat, Tri(3,4-dimethyl-1-hexyl)citrat, Tri(3,4-dimethyl-2-hexyl)citrat, Tri(3,4-dimethyl-3-hexyl)citrat, Tri(3,5-dimethyl-1-hexyl)citrat, Tri(3,5-dimethyl-2-hexyl)citrat,Tri(3,5-dimethyl-3-hexyl)citrat, Tri(4,4-dimethyl-1-hexyl)citrat, Tri(4,4-dimethyl-2-hexyl)citrat, Tri(4,4-dimethyl-3-hexyl)citrat, Tri(4,5-dimethyl-1-hexyl)citrat, Tri(4,5-dimethyl-2-hexyl)citrat, Tri(4,5-dimethyl-3-hexyl)citrat, Tri(5,5-dimethyl-1-hexyl)citrat, Tri(5,5-dimethyl-2-hexyl)citrat, Tri(5,5-dimethyl-3-hexyl)citrat, Tri(2-ethyl-1-hexyl)citrat, Tri(3-ethyl-1-hexyl)citrat, Tri(3-ethyl-2-hexyl)citrat, Tri(3-ethyl-3-hexyl)citrat, Tri(4-ethyl-1-hexyl)citrat, Tri(4-ethyl-2-hexyl)citrat, Tri(4-ethyl-3-hexyl)citrat, Tri(2-propyl-1-pentyl)citrat, Tri(2-ethyl-2-methyl-1-pentyl)citrat, Tri(2-ethyl-3-methyl-1-pentyl)citrat, Tri(2-ethyl-4-methyl-1-pentyl)citrat, Tri(3-ethyl-2-methyl-1-pentyl)citrat, Tri(3-ethyl-2-methyl-2-pentyl)citrat, Tri(3-ethyl-2-methyl-3-pentyl)citrat, , Tri(3-ethyl-3-methyl-1-pentyl)citrat, , Tri(3-ethyl-3-methyl-2-pentyl)citrat, Tri(3-ethyl-4-methyl-1-pentyl)citrat, Tri(3-ethyl-4-methyl-2-pentyl)citrat, Tri(2,2,3-trimethyl-1-pentyl)citrat), Tri(2,2,3-trimethyl-2-pentyl)citrat), Tri(2,2,3-trimethyl-3-pentyl)citrat) , Tri(2,2,4-trimethyl-1-pentyl)citrat), Tri(2,2,4-trimethyl-3-pentyl)citrat), Tri(2,3,3-trimethyl-1-pentyl)citrat), Tri(2,3,3-trimethyl-2-pentyl)citrat), Tri(2,3,4-trimethyl-1-pentyl)citrat), Tri(2,3,4-trimethyl-2-pentyl)citrat), Tri(2,3,4-trimethyl-3-pentyl)citrat), Tri(2,4,4-trimethyl-1-pentyl)citrat), Tri(2,4,4-trimethyl-2-pentyl)citrat), Tri(3,3,4-trimethyl-1-pentyl)citrat), Tri(3,3,4-trimethyl-2-pentyl)citrat), Tri(3,4,4-trimethyl-1-pentyl)citrat), Tri(3,4,4-trimethyl-2-pentyl)citrat),Tri(2-Ethyl-2,3-dimethyl-1-butyl)citrat, Tri(2-Ethyl-3,3-dimethyl-1-butyl)citrat, Tri(3-methyl-2-(1-methylethyl)-1-butyl)citrat, Tri(2,2-diethyl-1-butyl)citrat, Tri(2,2,3,3-Tetramethyl-1-butyl)citrat, Trivinylcitrat, Triallylcitrat, Tri(2-(acryloyloxy)ethyl)citrat,Tri(2-(Methacryloyloxy)ethyl)citrat, Tribenzylcitrat, Triphenylcitrat Tricyclopropylcitrat, Tricyclobutylcitrat, Tricyclopentylcitrat, Tricyclohexylcitrat, Tricycloheptylcitrat, Tricyclooctylcitrat und Mischungen der vorgenannten.

Besonders bevorzugte Citrate B) sind Trimethylcitrat, Triethylcitrat, Tripropylcitrat, Triisopropylcitrat, Tri-n-butylcitrat, Tri-sec-butylcitrat, Tri-iso-butylcitrat, Tri-tert-butylcitrat, Tri-n-pentylcitrat, Tri-n-hexylcitrat, Tri-n-octylcitrat, Tri(2-ethyl-1-hexyl)citrat und Mischungen der vorgenannten und ganz besonders bevorzugte Citrate B) sind Trimethylcitrat, Triethylcitrat, Tributylcitrat und Mischungen der vorgenannten.

Falls erwünscht können die genannten Citrate B) auch mischverestert sein, beispielsweise Diethyl-methylcitrat oder Butyl-diethylcitrat.

Da die Citrate B) mit den Isocyanatgruppen die 2-Carbamoylpropan-1,2,3-tricarboxylat-Strukturen der erfindungsgemäßen blockierten Polyisocyanate bilden, sind die 2-Carbamoylpropan-1,2,3-trimethoxylat-Strukturen, 2-Carbamoylpropan-1,2,3-triethoxylat-Strukturen, 2-Carbamoylpropan-1,2,3-tributoxylat-Strukturen und Mischungen der vorgenannten ganz besonders bevorzugte Strukturen und ganz besonders bevorzugte Ausführungsformen der allgemeinen Formel (I).

Citronensäureester wie beispielsweise das Triethylcitrat sind im Gegensatz zu den aus dem Stand der Technik bekannten Blockierungsmittel nicht toxisch, reizend oder anderweitig gesundheitsschädlich.

Zur Durchführung des erfindungsgemäßen Verfahrens wird das mindestens eine Polyisocyanat A) mit dem mindestens einen Citrat B) vorzugsweise bei Temperaturen von 20 bis 120 °C, besonders bevorzugt von 40 bis 100 °C zum erfindungsgemäßen blockierten Polyisocyanat umgesetzt.

Die Blockierungsreaktion im erfindungsgemäßen Verfahren kann thermisch induziert ohne Katalysator durchgeführt werden oder in Gegenwart mindestens einen Katalysators. Bevorzugt wird die Umsetzung in Gegenwart mindestens ein Katalysator durchgeführt. Hieraus ergibt sich der Vorteil, dass die Effizienz und Wirtschaftlichkeit des Verfahrens weiter erhöht wird.

Geeignete Katalysatoren sind tertiäre Amine, wie Triethylamin, Pyridin, Methylpyridin, 1,4-Diazabicyclo[2.2.2]octan, 1,8-Diazabicyclo[5.4.0]undec-7-en, 1,5-Diazabicyclo[4.3.0]non-5-en, 4-(Dimethylamino)pyridin, Benzyldimethylamin, N,N-Endoethylenpiperazin, N-Methylpiperidin, Pentamethyldiethylentriamin, N,N-Dimethylaminocyclohexan, N,N'-Dimethyl-piperazin, aber auch Metallsalze und -chelate, Salze von Übergangsmetallen, Halbmetallen oder anorganische Basen, wie beispielsweise Kaliumcarbonat. Als katalytisch wirkende Metallionen werden vorzugsweise Eisen(III)-, Bismuth(III)-, Zink(II)-, Zinn(II), Zinn (IV)-, Zirkonium(IV)-,Titan(IV)-, Molybdän(VI)- und Al(III) eingesetzt werden. Beispielhaft lassen sich Eisen(III)chlorid, Bismuth(III)-octoat, Bismuth(III)-triflat, Bismuth(III)-neodecanoat, Alumniumtri(ethylacetoacetat), Zink(II)chlorid, Zink(II)n-octanoat, Zink(II)-2-ethyl-1-hexanoat, Zink-2-ethylcaproat, Zink(II)-stearat, Zink(II)-naphtenat, Zink(II)acetylacetonat, Zinn(II)-n-octanoat, Zinn(II)-2-ethyl-1-hexanoat, Zinn(II)-ethylcaproat, Zinn(II)-laurat, Zinn(II)-palmitat), Zinn(II)-triflat, Zinn(II)-chlorid, Dibutyl-zinn(IV)oxid, Dibutylzinn(IV)-dichlorid, Dibutylzinn(IV)-diacetat, Dibutylzinn(IV)-dimaleat, Dibutlyzinn(IV)-dilaurat, Dioctylzinn(IV)-diacetat, Molybdänglykolat, Tetraisopropyltitanat, Tetrabutylitanat, Titan(IV)acetylacetonat, Zirconium(IV)-neodecanoat, Aluminium-tri-sec-butylat, Aluminium(III)-acetylacetonat, Aluminium(III)-triflat oder beliebige Mischungen solcher Katalysatoren verwendet werden.

Der gegebenenfalls anwesende mindestens eine Katalysator ist im erfindungsgemäßen Verfahren vorzugsweise in Mengen von 1 bis 10000 ppm, bevorzugt 10 bis 5000 ppm, besonders bevorzugt von 10 bis 1000 ppm und ganz besonders bevorzugt von 10 bis 250 ppm zugegen.

Bei den vorgenannten Metallionen enthaltenden Katalysatoren ist ein weiterer Vorteil, dass sich diese in den erfindungsgemäßen blockierten Polyisocyanaten qualitativ und quantitativ beispielsweise mittels ICP-OES oder ICP- MS messen lassen.

Das erfindungsgemäße Verfahren kann lösemittelfrei durchgeführt werden. Gegebenenfalls können aber auch geeignete, gegenüber den reaktiven Gruppen der Polyisocyanate A) inerte Lösemittel mitverwendet werden. Hierfür geeignet sind sowohl unter Verwendung fossiler Rohstoffe oder auch aus nachwachsenden Rohstoffen hergestellte Lösemittel, insbesondere die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Ethyl(-)-L-Lactat, Aceton, 2-Butanon, 4-Methyl-2-pentanon, Cyclohexanon, Dihydrolevoglucosenon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®}, Varsol^{®} (ExxonMobil Chemical Central Europe, Köln, DE) und Shellsol^{®} (Shell Deutschland Oil GmbH, Hamburg, DE) im Handel sind, aber auch Lösemittel wie Dimethylfuran, 2-Methyltetrahydrofuran, Dimethylisosorbid (DMI), γ-Valerolacton, Propylenglykoldiacetat, Diethylenglykoldimethylether, Dipropylenglykoldimethylether, Diethylenglykolethyl- und butyletheracetat, N-Methylpyrrolidon und N-Methylcaprolactam, oder beliebige Gemische solcher Lösemittel.

Im Anschluss an die Umsetzung des Polyisocyanates A) mit dem Citrat B) wenn der Gehalt an freien Isocyanatgruppen vorzugsweise 2 oder weniger Gew.-%, bevorzugt 1 oder weniger Gew.-%, besonders bevorzugt 0,5 oder weniger Gew.-% und ganz besonders bevorzugt 0,3 oder weniger Gew.-% beträgt, können die blockierten Polyisocyanate gegebenenfalls mit Lösemittel, beispielsweise zur Erniedrigung der Viskosität, weiter verdünnt werden. Dabei können neben den vorstehend genannten Lösemitteln auch alkoholische Lösemittel, wie z. B. n-Butanol oder Isobutylalkohol, verwendet werden, da die Isocyanatgruppen dann weitestgehend, vorzugweise vollständig mit dem Blockierungsmittel abreagiert haben.

Beim erfindungsgemäßen Verfahren können gegebenenfalls weitere Hilfs- und Zusatzstoffe, wie z. B. Antioxidatien oder Lichtschutzmittel mitverwendet werden. Diese können entweder einem oder mehreren der Reaktionspartner A), B) und gegebenenfalls dem Katalysator bereits vor Beginn der eigentlichen Umsetzung zugemischt werden. Sie können aber auch zu jedem beliebigen Zeitpunkt während der Umsetzung dem Reaktionsgemisch oder im Anschluss an die Umsetzung den erfindungsgemäßen blockierten Polyisocyanaten zugegeben werden.

Geeignete Antioxidantien sind beispielsweise Phenole, insbesondere sterisch gehinderte Phenole, wie z. B. 2,6-Di-tert-butylphenol, 2,4-Dimethyl-6-tert-butylphenol, 2,6-Di-tert-butyl-4-methylphenol, Triethylenglykol-bis(3-tert-butyl-4-hydroxy-5-methylphenyl)propionat, Octadecyl-3-(3,5-di-tert-butyl-4-hydroxy-phenyl)-propionat, Pentaerythrit-tetrakis(3-(3,5-di-tert-butyl-4-hydroxy-phenyl)propionat), Ester der 3-(3,5-Di-tert-butyl-4-hydroxyphenyl)propionsäure mit aliphatischen verzweigten C7- bis C9-Alkoholen, wie z. B. Isoheptyl-3-(3,5-di-tert-butyl-4-hydroxyphenyl)propionat, Isooctyl-3-(3,5-di-tert-butyl-4-hydroxyphenyl)propionat oder Isononyl-3-(3,5-di-tert-butyl-4-hydroxyphenylpropionat, Isotridecyl-3-(3,5-di-tert-butyl-4-hydroxyphenyl)propionat, Thiodiethyl-bis[3-(3,5-di-tert-butyl-4-hydroxyphenyl)propionat], N,N'-Hexamethylen-bis(3,5-di-tert-butyl-4-hydroxyphenyl)propionsäureamid, 1,2-Bis(3,5-di-tert-butyl-4-hydroxyphenylpropionsäure)hydrazid, 2,4-Di-tert-butylphenyl-4'-hydroxy-3',5'-di-tert-butylbenzoat, Ester der (3,5-di-tert-butyl-4-hydroxyphenyl)methylthioessigsäure mit aliphatischen verzweigten C10- bis C14-Alkoholen, 2,2'-Thio-bis(4-methyl-6-tert-butylphenol), 2-Methyl-4,6-bis(octylthiomethyl)phenol, 1,3,5-Trimethyl-2,4,6-Tris(3,5-di-tert-butyl-4-hydroxybenzyl)benzol, Tris(3,5-di-tert-butyl-4-hydroxybenzyl)isocyanurat oder 2,5-Di-tert-amylhydrochinon.

Geeignete Antioxidantien sind auch Thioether, wie z. B. Didodecyl-3,3'-thiodipropionat oder Dioctadecyl-3,3'-thiodipropionat, die vorzugsweise in Kombination mit phenolischen Antioxidatien der genannten Art eingesetzt werden.

Weitere geeignete Antioxidantien sind Phosphite, beispielsweise di- oder vorzugsqweise trisubstituierte Phosphite, wie z. B. Dibutylphosphit, Dibenzylphosphit, Triethylphosphit, Tributylphosphit, Triisodecylphosphit, Trilaurylphosphit, Tris(tridecyl)phosphit, Triphenylphosphit, Tris(2,4-di-tert-butylphenyl)phosphit, Tris(nonylphenyl)phosphit, Diphenylisooctylphosphit, Diphenyl-isodecylphosphit, Diisodecyl-phenylphosphit, Diisooctyloctylphenylphosphit, Phenyl-neopentylglykolphosphit, 2,4,6-Tri-tert.-butylphenyl-(2-butyl-2-ethyl-1,3-propandiol)phosphit, Diisodecyl-pentaerythritdiphosphit, Distearylpentaerythritdiphosphit, Bis(2,4-di-tert.-butylphenyl)-pen-taerythritdiphosphit oder Tetraphenyl-dipropylenglykoldiphosphit.

Geeignete Lichtschutzmittel sind beispielsweise UV-Absorber vom Typ 2-Hydroxyphenylbenzotriazol, solche vom Typ der am Stickstoffatom substituierten oder unsubstituierten HALS-Verbindungen, wie z. B. Tinuvin^{®} 292 oder Tinuvin^{®} 770 DF (BASF SE, Ludwigshafen, DE), oder solche, wie sie beispielsweise in "Lichtschutzmittel für Lacke" (A. Valet, Vincentz Verlag, Hannover, 1996 und "Stabilization of Polymeric Materials" (H. Zweifel, Springer Verlag, Berlin, 1997, Appendix 3, S. 181-213) beschrieben sind.

Weitere Hilfs- und Zusatzstoffe, die gegebenenfalls beim erfindungsgemäßen Verfahren mitverwendet werden können, sind auch die in EP-A 0 829 500 beschriebenen hydrazidgruppenhaltigen und/oder hydroxyfunktionellen Stabilisatoren, wie z. B. das Additionsprodukt von Hydrazin und Propylencarbonat.

Die genannten Hilfs- und Zusatzstoffe können beim erfindungsgemäßen Verfahren gegebenenfalls einzeln oder auch in beliebigen Kombinationen untereinander in Mengen von 0,001 bis 3,0 Gew.-%, bevorzugt 0,002 bis 2,0 Gew.-%, besonders bevorzugt von 0,005 bis 1,0 Gew.-%, jeweils bezogen auf die Gesamtmenge an Polyisocyanat A), eingesetzt werden.

Unabhängig von der Art der Verfahrensführung liefert das erfindungsgemäße Verfahren völlig klare und transparente, mit Triester der Citronensäure (im Rahmen der vorliegenden Erfindung auch Citrate) blockierte Polyisocyanate oder organische Lösungen solcher Polyisocyanate, die eine erheblich geringere Toxizität des Blockierungsmittels, eine sehr hohe Lager- und Verfestigungsstabilität und niedrige Viskosität aufweisen.

Gegenstand der Erfindung ist daher auch das nach dem erfindungsgemäßen Verfahren erhältliche oder erhaltene blockierte Polyisocyanat.

Ein weiterer Gegenstand der Erfindung ist die Verwendung eines oder mehrerer Citrate als Blockierungsmittel von Isocyanatgruppen oder zur Herstellung eines blockierten Polyisocyanates. Überraschenderweise lassen sich die Citrate zur reversiblen Blockierung einsetzen.

Außerdem ist die Verwendung eines oder mehrerer Citrate zur Viskositätserniedrigung von blockierten Polyisocyanaten und/oder zur Erniedrigung der Deblockierungstemperatur von blockierten Polyisocyanaten ein weiterer Gegenstand der vorliegenden Erfindung. Die erfindungsgemäßen blockierten Polyisocyanate weisen im Vergleich zu den im Stand der Technik bekannten Produkten deutlich niedrigere Viskositäten auf, so dass sie mit einem höheren Festkörperanteil genutzt werden können. Daraus ergibt sich der weitere Vorteil einer verbesserten Umweltbilanz.

Die erfindungsgemäßen blockierten Polyisocyanate stellen wertvolle Ausgangsmaterialien zur Herstellung von Polyurethankunststoffen nach dem Isocyanat-Polyadditionsverfahren dar. Sie eignen sich hervorragend als Vernetzerkomponenten für einkomponentige wärmehärtende lösemittelhaltige oder wässrige Lacksysteme, die insbesondere in der Kunststofflackierung, Automobil-Erstlackierung oder für Coil Coating-Anwendungen zum Einsatz kommen.

Ein weiterer Gegenstand der Erfindung sind daher Zusammensetzungen, enthaltend mindestens ein erfindungsgemäßes blockiertes Polyisocyanat und mindestens eine gegenüber Isocyanatgruppen reaktive Verbindung. Bevorzugt ist die erfindungsgemäße Zusammensetzung ein Beschichtungsmittel.

Auch Gegenstand der Erfindung ist ein Verfahren zur Herstellung eines Formkörpers oder eines Klebstoffs oder einer Beschichtung auf einem Substrat durch Umsetzung eines erfindungsgemäßen blockierten Polyisocyanates mit mindestens einer gegenüber Isocyanatgruppen reaktiven Verbindung gegebenenfalls unter Wärmeeinwirkung oder durch Umsetzung einer erfindungsgemäßen Zusammensetzung gegebenenfalls unter Wärmeeinwirkung.

Auch ein Formkörper oder geklebtes Substrat oder beschichtetes Substrat, umfassend eine ausgehärtete erfindungsgemäße Zusammensetzung oder umfassend ein Umsetzungsprodukt eines erfindungsgemäßen blockierten Polyisocyanates mit mindestens einer gegenüber Isocyanatgruppen reaktiven Verbindung oder umfassend ein Produkt erhältlich oder hergestellt durch das Verfahren zur Herstellung eines Formkörpers oder eines Klebstoffs oder einer Beschichtung auf einem Substrat durch Umsetzung eines erfindungsgemäßen blockierten Polyisocyanates mit mindestens einer gegenüber Isocyanatgruppen reaktiven Verbindung gegebenenfalls unter Wärmeeinwirkung oder durch Umsetzung einer erfindungsgemäßen Zusammensetzung gegebenenfalls unter Wärmeeinwirkung sind weitere Gegenstände der vorliegenden Erfindung.

Die für das erfindungsgemäße blockierte Polyisocyanat und das erfindungsgemäße Verfahren beispielhaft und als bevorzugt gekennzeichneten Merkmale und Ausführungsformen sind auch für die weiteren Erfindungsgegenstände bevorzugt.

Die nachfolgenden Beispiele dienen zur Verdeutlichung der vorliegenden Erfindung, sollen aber keinesfalls als Einschränkung des Schutzbereichs verstanden werden.

### Beispiele

Synthesen wurden inert, mittels Schlenktechnik, in zuvor ausgeheizten Glasapparaturen unter trockenem Stickstoff durchgeführt.

Alle Prozentangaben beziehen sich, soweit nicht anders angegeben, auf das Gewicht.

Die Bestimmung der NCO-Gehalte, auch die Bestimmung der Gehalte an freien NCO-Gruppen, erfolgte titrimetrisch nach DIN EN ISO 11909:2007-05.

Der Verlauf der Blockierungsreaktion und die NCO-Freiheit der blockierten Polyisocyanate wurde anhand der Abnahme bzw. des Fehlens der Isocyanatbande (ca. 2270 cm⁻¹) im IR-Spektrum verfolgt.

Die Restmonomerengehalte wurden nach DIN EN ISO 10283:2007-11 gaschromatographisch mit internem Standard gemessen.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s⁻¹.

Die Messung der Platin-Cobalt-Farbzahl erfolgte spektrofotometrisch nach DIN EN ISO 6271-2:2005-03 mit einem LICO 400-Spektrofotometer der Fa. Lange, DE.

### TGA-FT-IR:

Die thermogravimetrische Analyse wurde mit einem TG 209 F1 Libra^{®} der Fa. gekoppelt an ein FT-IR-Spektrometer ALPHA II der Fa. Bruker durchgeführt.

10 mg Probe (offene Aluminiumoxidtiegel) werden in einer Stickstoffatmosphäre erhitzt. Aufheizrate 20K/min, Temperaturbereich 30°C - 1000°C. Aufnahme von IR-Spektren während des Aufheizens der TGA, Messdauer eines Spektrums ca. 20 Sekunden (Aufsummierung von 16 Scans zu einem Spektrum), Messung der Absorption im Bereich von 4000 cm⁻¹ bis 500 cm⁻¹, Temperatur der Messzelle sowie der Transferleitung 200 °C.

### Chemikalien und Ausgangsverbindungen

Triethylcitrat (Merck KGaA , Sigma Aldrich Deutschland)
Tributylcitrat (Merck KGaA , Sigma Aldrich Deutschland)
MEKO (Merck KGaA , Sigma Aldrich Deutschland)
ε-Caprolactam (Merck KGaA , Sigma Aldrich Deutschland)
Hexamethylendiisocyanat HDI (Desmodur^{®} H, Covestro Deutschland AG)
Pentamethylendiisocyanat (Covestro Deutschland AG)
Isophorondiisocyanat, IPDI (Desmodur^{®} I, Covestro Deutschland AG)
Desmodur^{®} BL 3175 (MEKO blockiertes HDI-Polyisocyanat, Covestro Deutschland AG)
Desmodur^{®} BL 4265 (MEKO blockiertes IPDI-Polyisocyanat Covestro Deutschland AG)
Desmodur^{®} BL 3272 (ε-Caprolactam blockiertes HDI-Polyisocyanat Covestro Deutschland AG)
Desmodur^{®} BL 2078/2 (ε-Caprolactam blockiertes HDI-Polyisocyanat Covestro Deutschland AG)
Butylacetat (Azelis Deutschland GmbH)
Solvent Naphtha 150 ND (S 150 ND) (DHC Solvent Chemie GmbH)
Desmorapid^{®} SO (Covestro Deutschland AG)

### Ausgangspolyisocyanate

### Polyisocyanat 1:

Isocyanuratgruppen enthaltendes Polyisocyanat auf Basis von HDI, hergestellt nach EP 330 966.

1000 g Hexamethylendiisocyanat (HDI) wurden in einen Vierhalskolben, ausgestattet mit Rührer, Rückflusskühler, N₂-Durchleitungsrohr und Innenthermometer, vorgelegt, dreimal bei Raumtemperatur durch Anlegen eines Vakuums von ca. 50 mbar entgast und mit Stickstoff belüftet. Anschließend wurde zur Einleitung der Trimerisierungreaktion 12 g einer Katalysatorlösung, 0,5 %ige (2-Hydroxyethyl)trimethylammoniumhydroxid, in einem 1:1-Gemisch aus Methanol und 2-Ethylhexan-1,3-diol, innerhalb von 30 min hinzugetropft und langsam auf 70°C erhitzt. Die Mischung erhitzte sich auf ca. 75°C und wurde für eine Stunde bei dieser Temperatur gerührt. Anschließend wurden weitere 12 g Katalysatorlösung hinzugetropft und die Reaktionsmischung so lange gerührt, bis ein NCO-Gehalt von 38,0 % erreicht wurde. Die Reaktion wurde equimolar (bezogen auf Katalysatorbeladung) mit Dibutylphosphat (25 %ig in HDI) abgestoppt und anschließend mittels Dünnschichtdestillation (130 °C, 0,1 mbar) von überschüssigem HDI befreit. Es wurde ein farbloses Polyisocyanuratpolyisocyanat mit folgenden Kenndaten erhalten:

| | |
|---|---|
| NCO-Gehalt: | 21,7 Gew.-% |
| Gehalt an monomerem HDI: | < 0,1 % |
| Festkörpergehalt: | 100 % |
| Viskosität (23°C): | 3000 mPas |

### Polyisocyanat 2:

Isocyanuratgruppen enthaltendes Polyisocyanat auf Basis von PDI, hergestellt nach WO 2017/021150.

1000 g (6,49 mol) 1,5-Pentamethylendiisocyanat (PDI) wurden in einen Vierhalskolben ausgestattet mit Rührer, Rückflusskühler, N₂-Durchleitungsrohr und Innenthermometer vorgelegt, dreimal bei Raumtemperatur durch Anlegen eines Vakuums von ca. 50 mbar entgast und mit Stickstoff belüftet. Anschließend wurde der Ansatz auf 60 °C erwärmt und die Katalysatorlösung (1,5 %ig (2-Hydroxyethyl)trimethylammoniumhydroxid in einem 1:1-Gemisch von Methanol und 2-Ethylhexan-1,3-diol) in einer solchen Geschwindigkeit zudosiert, dass sich die Temperatur des Reaktionsgemisches trotz der exotherm einsetzenden Trimerisierungsreaktion auf maximal 80 °C erwärmte. Nach Erreichen eines NCO-Gehalts von 36,5 Gew.-% wurde mit Dibutylphosphat (equimolare Menge bezogen auf eingesetztes Trimethylbenzylammoniumhydroxid) die Reaktion gestoppt und das nicht umgesetzte monomere PDI bei einer Temperatur von 140 °C und einem Druck von 0,5 mbar im Dünnschichtverdampfer abgetrennt. Es wurde ein praktisch farbloses Polyisocyanuratpolyisocyanat mit folgenden Kenndaten erhalten:

| | |
|---|---|
| NCO-Gehalt: | 21,2 Gew.-% |
| Gehalt an monomerem PDI: | < 0,1 % |
| Festkörpergehalt: | 100 % |
| Viskosität (23°C): | 9850 mPas |

### Polyisocyanat 3:

Isocyanuratgruppen enthaltendes Polyisocyanat auf Basis von IPDI, hergestellt nach EP 0 003 765:
1332 g (6 mol) IPDI wurden in einen Vierhalskolben ausgestattet mit Rührer, Rückflusskühler, N₂-Durchleitungsrohr und Innenthermometer vorgelegt, dreimal bei Raumtemperatur durch Anlegen eines Vakuums von ca. 50 mbar entgast und mit Stickstoff belüftet. Es wurden 10 mL einer Katalysatorlösung 2-Hydroxyethyl)trimethylammoniumhydroxid (6 %ig gelöst in 2-Ethylhexanol/Methanol 4:1 v/v) hinzugetropft. Eine Exothermie setzte innerhalb von 30 Minuten ein (75 °C max.). Anschließend wurde auf 80 °C erhitzt und die Reaktionsmischung so lange nachgerührt, bis der NCO-Gehalt der Lösung einen Wert von 31,1 % erreicht hat (ca. 30 min). Durch Dünnschichtdestillation wurde das überschüssige IPDI entfernt und das anfallende Harz 70 % in Butylacetat gelöst. Es wurde ein praktisch farbloses Polyisocyanuratpolyisocyanat mit folgenden Kenndaten erhalten:

| | |
|---|---|
| NCO-Gehalt: | 11,9 Gew.-% |
| Gehalt an monomerem IPDI: | 0,2 % |
| Festkörpergehalt: | 70 % |
| Viskosität (23°C): | 620 mPas (70 % in BA) |

### Blockierte (Poly)isocyanate

### Modellverbindung: Blockiertes Isocyanat aus Triethylcitrat und Butylisocyanat

Butylisocyanat (0,46 g, 4,64 mmol, 1,0 val) wurde mit Desmorapid^{®} SO (200 ppm) versetzt. Zu dieser Mischung wurde unter trockenem Stickstoff und mechanischem Rühren Triethylcitrat (1,28 g, 4,64 mmol, 1,0 val) hinzugetropft. Anschließend wurde die Reaktionsmischung auf 50°C erhitzt und so lange gerührt, bis alle NCO-Gruppen umgesetzt wurden (festgestellt mittels IR-Spektroskopie). Es wurde ein farbloses, blockiertes Isocyanat erhalten. Die vollständige Blockierung wurde zusätzlich mittels ¹³C{¹H}-NMR Spektroskopie bestätigt, charakteristisches Urethansignal bei 154.3 ppm und fehlendes Signal des Kohlenstoffatoms der Isocyanatgruppe von Butylisocyanat bei 122.1 ppm.

Das erhaltene Produkt wurde anschließend mit n-Butanol versetzt (4 mL) und für 3 h bei 120°C gerührt. Nach Abkühlen der Lösung wurde diese erneut mittels ¹³C{¹H}-NMR Spektroskopie untersucht. Das charakteristische Signal der Urethanbindung aus Triethylcitrat und Butylisocyanat bei 154.3 ppm fehlt, statt dessen wird eine neue Urethanspezies bei 156.9 ppm beobachtet, welche der Urethanbindung aus Butylisocyanat und n-Butanol zugeordnet werden kann. Außerdem findet sich freies Triethylcitrat in der Reaktionsmischung.

Die hergestellte Modellsubstanz wurde ferner einer Thermogravimetrischen Analyse gekoppelt mit FT-IR-Spektroskopie unterzogen. Dabei zeigte sich, dass bereits ab 108°C freies Isocyanat (v= 2270 cm⁻¹) gebildet wird.

Die oben genannten Untersuchungen belegen den erfolgreichen Einsatz von Citraten als Blockierungsmittel für Isocyanate.

### Beispiel 1 (erfindungsgemäß):

Polyisocyanat 1 (157,50 g, 1,0 val) wurde in Butylacetat (68 g) gelöst und mit Desmorapid^{®} SO (200 ppm) versetzt. Zu dieser Lösung wurde unter trockenem Stickstoff und mechanischem Rühren Triethylcitrat (226,3 g, 0,82 mol, 1,0 val) hinzugetropft. Anschließend wurde die Reaktionsmischung auf 50°C erhitzt und so lange gerührt, bis alle NCO-Gruppen umgesetzt wurden (festgestellt mittels IR-Spektroskopie). Es wurde ein farbloses, blockiertes Polyisocyanat mit folgenden Kenndaten erhalten:

| | |
|---|---|
| Freier NCO-Gehalt: | 0,0% |
| Blockierter NCO-Gehalt: | 6,7% |
| Festkörpergehalt: | 75% |
| Viskosität (23°C): | 1500 mPas |

### Beispiel 2 (erfindungsgemäß):

Polyisocyanat 1 (98,25 g, 1,0 val) wurde in Butylacetat (42,1 g) gelöst und mit Desmorapid^{®} SO (200 ppm) versetzt. Zu dieser Lösung wurde unter trockenem Stickstoff und mechanischem Rühren Tributylcitrat (184,4 g, 0,51 mol, 1,0 val) hinzugetropft. Anschließend wurde die Reaktionsmischung auf 50°C erhitzt und so lange gerührt, bis alle NCO-Gruppen umgesetzt wurden (festgestellt mittels IR-Spektroskopie). Es wurde ein farbloses, blockiertes Polyisocyanat mit folgenden Kenndaten erhalten:

| | |
|---|---|
| Freier NCO-Gehalt: | 0,0% |
| Blockierter NCO-Gehalt: | 5,7% |
| Festkörpergehalt: | 75% |
| Viskosität (23°C): | 500 mPas |

### Beispiel 3 (erfindungsgemäß):

Polyisocyanat 2 (140,0 g, 1,0 val) wurde in Butylacetat (115,0 g) gelöst und mit Desmorapid^{®} SO (200 ppm) versetzt. Zu dieser Lösung wurde unter trockenem Stickstoff und mechanischem Rühren Triethylcitrat (202,0 g, 0,73 mol, 1,0 val) hinzugetropft. Anschließend wurde die Reaktionsmischung auf 50°C erhitzt und so lange gerührt, bis alle NCO-Gruppen umgesetzt wurden (festgestellt mittels IR-Spektroskopie). Es wurde ein farbloses, blockiertes Polyisocyanat mit folgenden Kenndaten erhalten:

| | |
|---|---|
| Freier NCO-Gehalt: | 0,0% |
| Blockierter NCO-Gehalt: | 6,7% |
| Festkörpergehalt: | 75% |
| Viskosität (23°C): | 3650 mPas |

### Beispiel 4 (erfindungsgemäß)

Polyisocyanat 3 (140,0 g, 1,0 val) wurde in Butylacetat (160,0 g) gelöst und mit Desmorapid^{®} SO (200 ppm) versetzt. Zu dieser Lösung wurde unter trockenem Stickstoff und mechanischem Rühren Triethylcitrat (159,0 g, 0,51 mol, 1 val) hinzugetropft. Anschließend wurde die Reaktionsmischung auf 50°C erhitzt und so lange gerührt, bis alle NCO-Gruppen umgesetzt wurden (festgestellt mittels IR-Spektroskopie). Es wurde ein farbloses, blockiertes Polyisocyanat mit folgenden Kenndaten erhalten:

| | |
|---|---|
| Freier NCO-Gehalt: | 0,0% |
| Blockierter NCO-Gehalt: | 5,2% |
| Festkörpergehalt: | 65% |
| Viskosität (23°C): | 640 mPas |

### Vergleichsbeispiel 1 (nicht erfindungsgemäß):

Desmodur^{®} BL 3175, ein MEKO blockiertes HDI -Polyisocyanat

| | |
|---|---|
| Blockierter NCO-Gehalt: | 11.1% |
| Festkörpergehalt: | 75% |
| Viskosität (23°C): | 3300 mPas |

### Vergleichsbeispiel 2 (nicht erfindungsgemäß):

Desmodur^{®} BL 4265, ein MEKO blockiertes IPDI-Polyisocyanat

| | |
|---|---|
| Blockierter NCO-Gehalt: | 8.1% |
| Festkörpergehalt: | 65% |
| Viskosität (23°C): | 11000 mPas |

### Vergleichsbeispiel 3 (MEKO blockiertes PDI-Polyisocyanat, nicht erfindungsgemäß):

Polyisocyanat 2 (173 g, 1 val) wurde unter trockenem Stickstoff und mechanischem Rühren mit Butylacetat (83,3 g) versetzt. Die Mischung wurde auf 50 °C aufgeheizt und MEKO (77 g, 1 val) langsam zugetropft, wobei die Innentemperatur auf bis zu 70 °C anstieg. Die Mischung wurde bei 70 °C so lange gerührt, bis alle NCO-Gruppen umgesetzt waren (IR Kontrolle). Es wurde ein farbloses, blockiertes Polyisocyanat mit folgenden Kenndaten erhalten:

| | |
|---|---|
| Blockierter NCO-Gehalt: | 11.1% |
| Festkörpergehalt: | 75% |
| Viskosität (23°C): | 4300 mPas |

### Vergleichsbeispiel 4 (nicht erfindungsgemäß):

### Desmodur^{®} BL3272, ein ε-Caprolactam blockiertes HDI-Polyisocyanat

| | |
|---|---|
| Blockierter NCO-Gehalt: | 10.2% |
| Festkörpergehalt: | 72% |
| Viskosität (23°C): | 2700 mPas |

### Vergleichsbeispiel 5 (nicht erfindungsgemäß):

### Desmodur^{®} BL2078/2, ein ε-Caprolactam blockiertes IPDI-Polyisocyanat

| | |
|---|---|
| Blockierter NCO-Gehalt: | 7.0% |
| Festkörpergehalt: | 60% |
| Viskosität (23°C): | 1750 mPas |

**Tabelle 1: Vergleich von Viskositäten der verschiedenen blockierten Polyisocyanate.**

| Beispiel | Festkörpergehalt [%] | Viskosität [mPas] | Blockierungsmittel | Polyisocyanat auf Basis von |
|---|---|---|---|---|
| 1 | 75 | 1500 | Triethylcitrat | HDI |
| 2 | 75 | 500 | Tributylcitrat | HDI |
| 3 | 75 | 3360 | Triethylcitrat | PDI |
| 4 | 65 | 640 | Triethylcitrat | IPDI |
| Vergleichsbeispiel 1 | 75 | 3300 | MEKO | HDI |
| Vergleichsbeispiel 2 | 65 | 11000 | MEKO | IPDI |
| Vergleichsbeispiel 3 | 75 | 4300 | MEKO | PDI |
| Vergleichsbeispiel 4 | 72 | 2700 | ε-Caprolactam | HDI |
| Vergleichsbeispiel 5 | 60 | 1750 | ε-Caprolactam | IPDI |

### Aus

Tabelle 1 wird ersichtlich, dass die erfindungsgemäßen Beispiele 1, 2 und 3 deutlich niedrigviskosere Produkte liefern, als vergleichbare blockierte Polyisocyanate (Vergleichsbeispiele 1-4). Dies ist sowohl bei gleichem als auch bei höherem Festkörperanteil der Fall. Das Betrachten der Viskositäten der Reihe der blockierten HDI-Polyisocyanate (Vergleichsbeispiel 1, Beispiel 1 und 2) zeigt eindrucksvoll, dass das mit Tributylcitrat blockierte System, Beispiel 2, noch niedriger in der Viskosität liegt, als Beispiel 1 oder Vergleichsbeispiel 1.

Blockierte Polyisocyanate auf Basis von Pentamethylendiisocyanat weisen im Vergleich zu den entsprechenden HDI-Typen deutlich höhere Viskositäten auf, vgl. Vergleichsbeispiel 1 und Vergleichsbeispiel 3. Die Viskosität des erfindungsgemäßen Triethylcitrat blockierten PDI-Polyisocyanats aus Beispiel 3 liegt deutlich niedriger als die entsprechende MEKO blockierte Variante. Aus Beispiel 4 wird, im Vergleich mit Vergleichsbeispiel 2 und 5, ersichtlich, dass dies auch für die IPDI-basierten Polyisocyanate gilt.

## Patentansprüche

1. Blockiertes Polyisocyanat, enthaltend zwei oder mehr 2-Carbamoylpropan-1,2,3-tricarboxylat-Strukturen.

2. Blockiertes Polyisocyanat gemäß Anspruch 1, **dadurch gekennzeichnet, dass** es zusätzlich eine oder mehrere Isocyanurat-, Allophanat-, Urethan-, Harnstoff-, Uretdion-, Iminooxadiazindion-, Oxadiazintrion- und/oder Biuretstruktur enthält.

3. Blockiertes Polyisocyanat gemäß einem der Ansprüche 1 oder 2, **dadurch gekennzeichnet, dass** die zwei oder mehr 2-Carbamoylpropan-1,2,3-tricarboxylat-Strukturen eine allgemeine Formel (I), 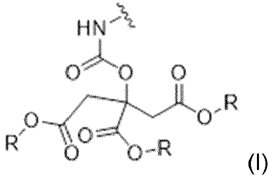 aufweisen, in welcher
R unabhängig voneinander für einen beliebigen gesättigten oder ungesättigten, linearen oder verzweigten, aliphatischen Rest mit 1 bis 18 Kohlenstoffatomen, gesättigten oder ungesättigten cycloaliphatischen Rest mit 3 bis 18 Kohlenstoffatomen, araliphatischen Rest mit 7 bis 18 Kohlenstoffatomen und/oder aromatischen Rest mit 6 bis 18 Kohlenstoffatomen steht, der jeweils substituiert oder unsubstituiert ist und/oder Heteroatome in der Kette aufweist.

4. Blockiertes Polyisocyanat gemäß einem der Ansprüche 1 bis 3, **dadurch gekennzeichnet, dass** die zwei oder mehr 2-Carbamoylpropan-1,2,3-tricarboxylat-Strukturen eine allgemeine Formel (I), 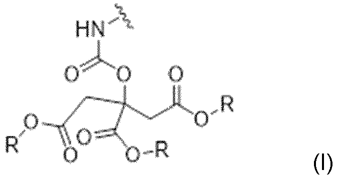 aufweisen, in welcher
R unabhängig voneinander für einen beliebigen gesättigten oder ungesättigten, linearen oder verzweigten, aliphatischen Rest mit 1 bis 8 Kohlenstoffatomen und/oder gesättigten oder ungesättigten cycloaliphatischen Rest mit 5 bis 8 Kohlenstoffatomen steht, der jeweils substituiert oder unsubstituiert ist und/oder Heteroatome in der Kette aufweist, vorzugsweise in welcher R unabhängig voneinander für einen beliebigen gesättigten oder ungesättigten, linearen oder verzweigten, aliphatischen Rest mit 1 bis 4 Kohlenstoffatomen steht, der jeweils substituiert oder unsubstituiert ist und/oder Heteroatome in der Kette aufweist, besonders bevorzugt in welcher R unabhängig voneinander für einen beliebigen gesättigten oder ungesättigten, linearen oder verzweigten, aliphatischen Rest mit 2 bis 4 Kohlenstoffatomen steht.

5. Verfahren zur Herstellung eines blockierten Polyisocyanates gemäß einem der Ansprüche 1 bis 4, umfassend eine Umsetzung von mindestens einem Polyisocyanat A) mit mindestens einem Citrat B) gegebenenfalls in Gegenwart mindestens eines Katalysators, wobei das Citrat B) in einer Menge von ≥ 95 Äquivalent-% bezogen auf die Isocyanatgruppen des Polyisocyanates A) eingesetzt wird.

6. Verfahren gemäß Anspruch 5, **dadurch gekennzeichnet, dass** das mindestens eine Polyisocyanat A) aliphatisch, cycloaliphatisch, araliphatisch und/oder aromatisch gebundene Isocyanatgruppen aufweist und/oder bevorzugt ein oder mehrere Isocyanuratstrukturen enthaltende Polyisocyanate auf Basis von 1,5-Diisocyanatopentan, 1,6-Diisocyanatohexan, 1-Isocyanato-3,3,5-trimethyl-5-isocyanatomethylcyclohexan, 1,3-Bis(isocyanatomethyl)-benzol, Bis-(isocyanatomethyl)-norbornan und/oder 4,4'-Diisocyanatodicyclohexylmethan umfasst.

7. Verfahren gemäß Anspruch 5 oder 6, **dadurch gekennzeichnet, dass** das mindestens eine Citrat B), eines der allgemeinen Formel (II), 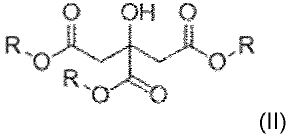 ist, in welcher
R unabhängig voneinander für einen beliebigen gesättigten oder ungesättigten, linearen oder verzweigten, aliphatischen Rest mit 1 bis 18 Kohlenstoffatomen, gesättigten oder ungesättigten cycloaliphatischen Rest mit 3 bis 18 Kohlenstoffatomen, araliphatischen Rest mit 7 bis 18 Kohlenstoffatomen und/oder aromatischen Rest mit 6 bis 18 Kohlenstoffatomen steht, der jeweils substituiert oder unsubstituiert ist und/oder Heteroatome in der Kette aufweist.

8. Verfahren gemäß einem der Ansprüche 5 bis 7, **dadurch gekennzeichnet, dass** das mindestens eine Citrat B), eines der allgemeinen Formel (II), 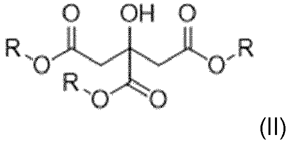 ist, in welcher
R unabhängig voneinander für einen beliebigen gesättigten oder ungesättigten, linearen oder verzweigten, aliphatischen Rest mit 1 bis 8 Kohlenstoffatomen und/oder gesättigten oder ungesättigten cycloaliphatischen Rest mit 5 bis 8 Kohlenstoffatomen steht, der jeweils substituiert oder unsubstituiert ist und/oder Heteroatome in der Kette aufweist, vorzugsweise in welcher R unabhängig voneinander für einen beliebigen gesättigten oder ungesättigten, linearen oder verzweigten, aliphatischen Rest mit 1 bis 4 Kohlenstoffatomen steht, der jeweils substituiert oder unsubstituiert ist und/oder Heteroatome in der Kette aufweist, besonders bevorzugt in welcher R unabhängig voneinander für einen beliebigen gesättigten oder ungesättigten, linearen oder verzweigten, aliphatischen Rest mit 2 bis 4 Kohlenstoffatomen steht.

9. Verfahren gemäß einem der Ansprüche 5 bis 8, **dadurch gekennzeichnet, dass** der mindestens eine Katalysator in Mengen von 1 bis 10000 ppm, bevorzugt 10 bis 5000 ppm, besonders bevorzugt von 10 bis 1000 ppm und ganz besonders bevorzugt von 10 bis 250 ppm zugegen ist.

10. Verwendung eines oder mehrerer Citrate als Blockierungsmittel von Isocyanatgruppen oder zur Herstellung eines blockierten Polyisocyanates.

11. Verwendung eines oder mehrerer Citrate zur Viskositätserniedrigung von blockierten Polyisocyanaten und/oder zur Erniedrigung der Deblockierungstemperatur von blockierten Polyisocyanaten.

12. Zusammensetzung, enthaltend mindestens ein blockiertes Polyisocyanat gemäß einem der Ansprüche 1 bis 4 und mindestens eine gegenüber Isocyanatgruppen reaktive Verbindung.

13. Verfahren zur Herstellung eines Formkörpers oder eines Klebstoffs oder einer Beschichtung auf einem Substrat durch Umsetzung eines blockierten Polyisocyanates gemäß einem der Ansprüche 1 bis 4 mit mindestens einer gegenüber Isocyanatgruppen reaktiven Verbindung gegebenenfalls unter Wärmeeinwirkung oder durch Umsetzung einer Zusammensetzung gemäß Anspruch 12 gegebenenfalls unter Wärmeeinwirkung.

14. Formkörper oder geklebtes Substrat oder beschichtetes Substrat, umfassend eine ausgehärtete Zusammensetzung gemäß Anspruch 12 oder umfassend ein Umsetzungsprodukt eines blockierten Polyisocyanates gemäß einem der Ansprüche 1 bis 4 mit mindestens einer gegenüber Isocyanatgruppen reaktiven Verbindung oder umfassend ein Produkt erhältlich oder hergestellt durch das Verfahren gemäß Anspruch 13.
